(19) Europäisches Patentamt / European Patent Office / Office européen des brevets

(11) **EP 4 435 942 A1**

(12) **EUROPEAN PATENT APPLICATION**

(43) Date of publication:
**25.09.2024 Bulletin 2024/39**

(21) Application number: **23198066.5**

(22) Date of filing: **18.09.2023**

(51) International Patent Classification (IPC):
***H01M 50/193*** *(2021.01)* ***H01M 10/052*** *(2010.01)*
***H01M 10/0566*** *(2010.01)* ***H01M 10/0587*** *(2010.01)*
***H01M 50/186*** *(2021.01)* ***H01M 50/197*** *(2021.01)*
***H01M 50/198*** *(2021.01)* ***C09J 125/18*** *(2006.01)*
***C09J 133/08*** *(2006.01)* ***C09J 133/10*** *(2006.01)*

(52) Cooperative Patent Classification (CPC):
**H01M 10/0587; C09J 7/385; C09J 133/08; C09J 133/10; H01M 10/052; H01M 10/0566; H01M 50/186; H01M 50/193; H01M 50/197; H01M 50/198;** C09J 2203/33; C09J 2301/208; C09J 2433/00; C09J 2467/006; H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.03.2023 KR 20230036796**
**24.08.2023 KR 20230111555**

(71) Applicant: **Samsung SDI Co., Ltd.**
**Yongin-si, Gyeonggi-do 17084 (KR)**

(72) Inventors:
- **CHO, Ik Hwan**
  **17084 Yongin-si (KR)**
- **KWAK, Byeongdo**
  **17084 Yongin-si (KR)**
- **WOO, Changhee**
  **17084 Yongin-si (KR)**
- **PARK, Jinhwan**
  **17084 Yongin-si (KR)**

(74) Representative: **Marks & Clerk LLP**
**15 Fetter Lane**
**London EC4A 1BW (GB)**

(54) **SEALING TAPE FOR RECHARGEABLE LITHIUM BATTERY AND RECHARGEABLE LITHIUM BATTERY INCLUDING THE SAME**

(57) Disclosed are a sealing tape for a rechargeable lithium battery and a rechargeable lithium battery including the same. In some embodiments, a sealing tape for a rechargeable lithium battery includes a single-layered adhesive layer having adhesion strength on both surfaces; the adhesive layer includes a (meth)acrylic copolymer and a crosslinking agent; and the (meth)acrylic copolymer includes a moiety derived from a first substituted or unsubstituted C1 to C20 alkyl (meth)acrylate-based compound; a moiety derived from a second substituted or unsubstituted C3 to C20 cycloalkyl (meth)acrylate-based compound; a moiety derived from a third hydroxy group-containing compound; and a moiety derived from a fourth unsaturated morpholine-containing compound.

FIG. 2

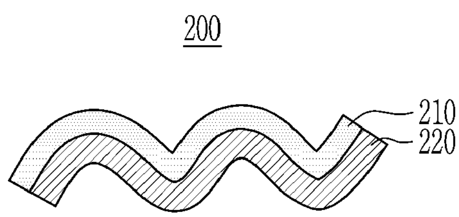


EP 4 435 942 A1

## Description

## BACKGROUND OF THE INVENTION

### (a) Field of the Invention

A sealing tape for a rechargeable lithium battery and a rechargeable lithium battery including the same are disclosed.

### (b) Description of the Related Art

Recently, rechargeable lithium batteries have drawn huge attention as various energy sources.

The rechargeable lithium batteries may be largely classified into can-type rechargeable lithium batteries and pouch-type rechargeable batteries according to a battery case shape. In addition, the can-type rechargeable lithium batteries may be classified into cylindrical rechargeable lithium batteries and prismatic rechargeable lithium batteries.

The cylindrical rechargeable lithium batteries are manufactured by winding a stack of a positive electrode, a separator, and a negative electrode into a jelly roll-type electrode assembly, housing the jelly roll-type electrode assembly in a cylindrical battery case, and then, sealing the case.

In order to house the jelly roll-type electrode assembly in the cylindrical battery case, the jelly roll-type electrode assembly is manufactured to be smaller than the cylindrical battery case. Accordingly, a certain gap is formed between the cylindrical battery case and the jelly roll-type electrode assembly.

However, because of the gap, the jelly roll-type electrode assembly may easily rotate or move inside the cylindrical battery case, deteriorating performance (for example, internal resistance increase, electrode tab damage, etc.) of the rechargeable lithium batteries.

In this regard, a 'sealing tape' for suppressing a flow of the jelly roll-type electrode assembly inside the cylindrical battery case has been proposed. This sealing tape is applied to the gap to attach the jelly roll-type electrode assembly to an inside wall of the cylindrical battery case and simultaneously, filling the gap.

However, sealing tapes known to date cannot overcome a decrease in adhesion strength over time and an isotropic volume change of the electrode assembly due to continuous charging and discharging, and eventually when internal/external vibration or impact occurs, the flow of the jelly roll-type electrode assembly inside the cylindrical battery case cannot be suppressed.

## SUMMARY OF THE INVENTION

In a novel sealing tape according to some embodiments, when in contact with a fluid such as a liquid, a three-dimensional shape capable of filling a gap can be realized by mutual balance between a force generated as the base layer expands and a fixing force of the adhesive layer.

Some embodiments provide a novel sealing tape for a rechargeable lithium battery including a base layer and an adhesive layer on at least one surface of the base layer; wherein the base layer includes a first (meth)acrylic copolymer; and the adhesive layer includes a second (meth)acrylic copolymer and crosslinking agent.

At least some of the above and other features of the invention are set out in the claims.

The novel sealing tape according to some embodiments overcomes decrease in adhesion strength over time and the isotropic volume change of the electrode assembly due to continuous charging and discharging, and the like, even when internal/external vibration or shock occurs, it is possible to suppress the jelly roll-type electrode assembly from flowing inside the cylindrical battery case.

Accordingly, in the rechargeable lithium battery in which the novel sealing tape according to some embodiments is applied to the gap between the cylindrical battery case and the jelly roll electrode assembly, an increase in internal resistance, damage to the electrode tab, etc. are suppressed, and excellent performance can be maintained.

## BRIEF DESCRIPTION OF THE DRAWINGS

FIG. 1 is a schematic view showing the novel sealing tape 200 in some embodiments.

FIG. 2 is a schematic view showing how the novel sealing tape 200 according to some embodiments is deformed while in contact with the fluid.

FIG. 3 is a drawing that structurally illustrates the polymer of the semi-interpenetrating polymer network (semi-IPN) structure.

FIG. 4 is a schematic view showing a rechargeable lithium battery according to some embodiments.

## DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "a combination thereof" refers to a mixture, a laminate, a composite, a copolymer, an alloy, a blend, a reaction product, and the like of constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

As used herein, when a specific definition is not otherwise provided, "substituted" refers to replacement of at least one hydrogen atom of a compound by a substituent of a halogen atom (F, Cl, Br, or I), a hydroxy group, C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a combination thereof.

As used herein, when a specific definition is not otherwise provided, "cycloalkyl" includes "monocycloalkyl" and "bicycloalkyl", wherein "bicycloalkyl" is fused, spiro, or bridged bicyclic hydrocarbon.

As used herein, when a specific definition is not otherwise provided, "heterocycloalkyl group", "heterocycloalkenyl group", "heterocycloalkynyl group", and "heterocycloalkylene group" mean cycloalkyl, cycloalkenyl, cycloalkynyl, and cycloalkylene in which at least one N, O, S, or P heteroatom exists in the cyclic compound, respectively.

As used herein, when a specific definition is not otherwise provided, "(meth)acrylate" refers to both "acrylate" and "methacrylate".

As used herein, when a definition is not otherwise provided, the term "combination" refers to mixing or copolymerization. Further, "copolymerization" means block copolymerization or random copolymerization, and "copolymer" means block copolymer or random copolymer.

In the chemical formula of the present specification, unless a specific definition is otherwise provided, hydrogen is bonded at the position when a chemical bond is not drawn where supposed to be given.

As used herein, when a specific definition is not otherwise provided, "*" indicates a point where the same or different atom or chemical formula is linked.

In the present specification, "moiety" refers to a certain part or unit derived from a specific compound when a specific compound participates in a chemical reaction and is included in a polymerization reaction product. For example, in a first (meth)acrylic copolymer, the "moiety" derived from the first compound refers to a certain part or unit derived from the first compound.

"Thickness" may be measured through a picture taken with an optical microscope such as a scanning electron microscope.

### (Sealing Tape)

Some embodiments provide a novel sealing tape for a rechargeable lithium battery including a base layer and an adhesive layer on at least one surface of the base layer; wherein the base layer includes a first (meth)acrylic copolymer; and the adhesive layer includes a second (meth)acrylic copolymer and crosslinking agent.

The first (meth)acrylic copolymer includes a moiety derived from a first (meth)acrylate-based compound having a substituted or unsubstituted C1 to C20 alkyl group; a moiety derived from a second (meth)acrylate-based compound having a substituted or unsubstituted C3 to C20 cycloalkyl group; and a moiety derived from a third (meth)acrylate-based

compound having a C1 to C20 alkyl group substituted with a phenoxy group.

In addition, the second (meth)acrylic copolymer includes a moiety derived from a fourth (meth)acrylate-based compound having a substituted or unsubstituted C1 to C20 alkyl group.

Herein, the first (meth)acrylic copolymer and the second (meth)acrylic copolymer are the same or different.

FIG. 1 is a schematic view illustrating a novel sealing tape 200 of some embodiments; and FIG. 2 is a schematic view showing the deformation of the novel sealing tape 200 according to the embodiment in a state of contact with a fluid. Hereinafter, a novel sealing tape 200 according to some embodiments will be described with reference to FIGS. 1 and 2.

As shown in FIG. 1, the novel sealing tape 200 according to some embodiments includes a base layer 220 and an adhesive layer 210 on at least one surface of the base layer 220.

(1) In the novel sealing tape 200 according to some embodiments, the base layer 220 includes the first (meth)acrylic copolymer, so that it can swell when in contact with an electrolyte solution, which is a type of fluid.

(2) On the other hand, in the novel sealing tape 200 according to some embodiments, the adhesive layer 210 includes the second (meth)acrylic copolymer and the crosslinking agent, so that it has excellent adhesion strength even when in contact with an electrolyte solution, which is a type of fluid.

Therefore, as shown in FIG. 2, if the novel sealing tape 200 according to some embodiments contacts a fluid, a mutual balance between a force generated as the base layer expands and a fixing force of the adhesive layer, it is possible to implement a three-dimensional shape that can fill the gap.

As a result, the novel sealing tape 200 according to some embodiments overcomes decrease in adhesion strength over time and the isotropic volume change of the electrode assembly due to continuous charging and discharging, and the like, even when internal/external vibration or shock occurs, meaning that it is possible to suppress the jelly roll-type electrode assembly from flowing inside the cylindrical battery case.

Furthermore, in the rechargeable lithium battery in which the novel sealing tape according to some embodiments is applied to the gap between the cylindrical battery case and the jelly roll electrode assembly, an increase in internal resistance, damage to the electrode tab, etc. are suppressed, and excellent performance can be maintained.

Hereinafter, a novel sealing tape according to some embodiments will be described in more detail.

<u>Base Layer</u>

The base layer may swell upon contact with the electrolyte solution by including the first (meth)acrylic copolymer.

For example, a strain rate of the base layer may be greater than or equal to about 50%, greater than or equal to about 60%, greater than or equal to about 70%, or greater than or equal to about 75%, and less than or equal to about 150%, less than or equal to about 130%, less than or equal to about 100%, or less than or equal to about 95% when impregnated with an electrolyte solution at 25 °C for 120 minutes or more and 1 day or less, wherein the strain rate is according to Equation 1. Herein, the composition of the electrolyte solution may be ethylene carbonate (EC), dimethyl carbonate (DMC), propylene carbonate (PC) and fluorobenzene (FB). The electrolyte solution may include 1.1 M $LiPF_6$ dissolved in a solvent in which ethylene carbonate (EC), dimethyl carbonate (DMC), propylene carbonate (PC) and fluorobenzene (FB) are mixed in a volume ratio of EC: DMC: PC: FB=30:55:5:10:

[Equation 1]

$$(B-A)/A$$

wherein, in Equation 1, A is a length in a specific direction of the base layer before impregnation with an electrolyte solution; and B is a specific direction length of the base layer after impregnation with an electrolyte solution.

If the strain rate upon impregnation of the base layer with the electrolyte solution is less than the above range, the jelly roll-type electrode assembly may be loosened during a subsequent process, whereas if it exceeds the above range, the diameter increases, making it difficult to insert into the cylindrical battery case.

For example, strain measurement conditions when the base layer is impregnated with an electrolyte solution are as follows. A specimen is manufactured by cutting the base layer to have a width * length = 10 mm * 10 mm, and the strain rate can be evaluated by Equations 1-1 and 1-2 in the longitudinal direction and width direction of the specimen, respectively:

[Equation 1-1]

$$\text{Strain rate in a longitudinal direction} = (L2 - L1)/L1 \times 100$$

In Equation 1-1, L1 is a length in a length (longitudinal) direction of the specimen measured before impregnation with the electrolyte solution, that is, 10 mm; and L2 is a length in a length (longitudinal) direction of the specimen measured after impregnation with the electrolyte solution.

[Equation 1-2]

$$\text{Strain rate in a width direction} = (W2 - W1)/W1 \times 100$$

In Equation 1-2, W1 is a length in a width (horizontal) direction of the specimen measured before impregnation with the electrolyte solution, that is, 10 mm; W2 is a length in a width (horizontal) direction of the specimen measured after impregnation with the electrolyte solution.

The high strain rate (swelling rate) of the base layer upon impregnation with the electrolyte solution may be caused by the first (meth)acrylic copolymer constituting the base layer.

For example, the first (meth)acrylic copolymer includes a moiety derived from a first (meth)acrylate-based compound having a substituted or unsubstituted C1 to C20 alkyl group; a moiety derived from a second (meth)acrylate-based compound having a substituted or unsubstituted C3 to C20 cycloalkyl group; and a moiety derived from a third (meth)acrylate-based compound having a C1 to C20 alkyl group substituted with a phenoxygroup.

Because the first (meth)acrylic copolymer includes the aforementioned moieties, at least a portion of the base layer may contact the electrolyte solution to exhibit adhesion strength.

Accordingly, if the novel sealing tape of some embodiments is applied to the gap, if the base layer is placed in contact with the cylindrical battery case and then the electrolyte solution is injected, at least a portion of the base layer is formed in contact with the inner wall of the cylindrical battery case and being in contact with each other, a gap may be filled while attaching the jelly roll-type electrode assembly to the inner wall of the cylindrical battery case.

The moieties constituting the first (meth)acrylic copolymer will be described later, and the structure of the base layer will be described.

The base layer may further include a PET film, and in this case, mechanical strength of the novel sealing tape of some embodiments may be increased.

For example, the base layer may be obtained by interposing the first (meth)acrylic copolymer film between two PET films. In other words, the base layer may include the first base layer including a first PET film; a second base layer including the first (meth)acrylic copolymer; and a third base layer including a second PET film which are sequentially stacked.

Herein, a total thickness of the base layer is about 5 $\mu$m to about 150 $\mu$m; a thickness ratio of the first base layer : the second base layer may be about 1:9 to about 9:1; and a thickness ratio of the third base layer : the second base layer may be about 1:9 to about 9:1.

Adhesive Layer

By including the second (meth)acrylic copolymer and the crosslinking agent, the adhesive layer not only has excellent initial adhesion strength, but also suppresses deterioration of adhesion strength over time, and maintains excellent adhesion strength even when in contact with the electrolyte solution.

For example, when the adhesive layer is peeled at a peel angle of 180 degrees, a peel force may be greater than about 400 N/cm, greater than or equal to about 450 N/cm, greater than or equal to about 500 N/cm, or greater than or equal to about 550 N/cm; and less than or equal to about 1,000 N/cm, less than or equal to about 900 N/cm, less than or equal to about 800 N/cm, less than or equal to about 700 N/cm, or less than or equal to about 650 N/cm.

For example, in order to measure the peel force of the adhesive layer, a specimen is prepared by cutting a novel sealing tape of some embodiments such that the horizontal length is 25 mm and the vertical length is 200 mm. The adhesive layer side of the specimen is attached to the glass plate using a 2 kg rubber roller, and stored at room temperature for about 2 hours. Thereafter, the peel force is measured while peeling at a peeling speed of 5 mm/sec and a peeling angle of 180 degrees using a tensile tester.

The excellent adhesion strength of the adhesive layer may be caused by the second (meth)acrylic copolymer constituting the adhesive layer.

For example, the second (meth)acrylic copolymer includes a moiety derived from a fourth (meth)acrylate-based

compound having a substituted or unsubstituted C1 to C20 alkyl group; a moiety derived from a fifth (meth)acrylate-based compound having a substituted or unsubstituted C3 to C20 cycloalkyl group; and a moiety derived from a sixth (meth)acrylate-based compound having a C1 to C20 alkyl group substituted with a phenoxy group.

Moieties constituting the second (meth)acrylic copolymer will be described later, and structures formed by the second (meth)acrylic copolymer and the crosslinking agent in the adhesive layer will be described.

In the adhesive layer, the second (meth)acrylic copolymer may be crosslinked by the crosslinking agent to form a polymer having a semi-interpenetrating polymer network (semi-IPN) structure.

The adhesive layer may include a network structure polymer formed by crosslinking the second (meth)acrylic copolymer with the crosslinking agent; and a linear polymer including the second (meth)acrylic copolymer, independently of the network structure polymer.

In the adhesive layer 200, the (meth)acrylic copolymer may be crosslinked by the crosslinking agent to form a polymer having a semi-interpenetrating polymer network (semi-IPN) structure.

For example, as shown in FIG. 3, in the polymer 300 of the semi-interpenetrating polymer network (semi-IPN) structure, the (meth)acrylic copolymer 1 is crosslinked by the crosslinking agent 2 and may include a network structure polymer formed by crosslinking the (meth)acrylic copolymer 1 with the crosslinking agent 2; and independently of the network structure polymer, a linear polymer including the (meth)acrylic copolymer 1' may also be present.

If the (meth)acrylic copolymer 1 is crosslinked by the crosslinking agent 2 to form a polymer 300 having a semi-IPN structure, in the case where the (meth)acrylic copolymer 1 and the crosslinking agent 2 exist independently (blended), adhesion strength, mechanical properties, chemical resistance, expandability when impregnated with an electrolyte solution, etc. may be improved compared with the case where only one of the above two materials is present.

A crosslinking degree of the adhesive layer may be about 85% to about 98%. Herein, the crosslinking degree can be confirmed by the gel fraction (gel contents). If the crosslinking degree of the adhesive layer is less than about 85%, the adhesive layer may be swollen and dispersed. In contrast, if the crosslinking degree of the adhesive layer exceeds about 98%, the adhesive layer may have too high a stiffness.

The crosslinking degree (gel fraction) of the adhesive layer can be measured by the following method.

A weighed sample (weight: 1g) is added in a 20 ml vial into a wire mesh bag having 200 meshes, 1 ,2,4-trichlorobenzene (about 10 ml) is added enough to submerge the sample, and is heated at 130 °C for 2 hours or more. Thereafter, the undissolved components not filtered through the wire mesh having 200 meshes are washed twice in a xylene solution, and then dried in a hot air oven at 120 °C for 12 hours. Finally, dry undissolved components are weighed (weight: W mg), and calculated using Equation 2:

[Equation 2]

$$\text{Gel fraction (\%)} = (W/WO) \times 100.$$

wherein, in Equation 2, W is a weight of the dried undissolved component; and WO is a weight of the first sample, that is, 1g.

A thickness of the adhesive layer is not particularly limited, and an adhesive layer of about 5 μm to about 150 μm may be formed.

First and Second (Meth)acrylic Copolymers

Both of the first and second (meth)acrylic copolymers are excellent in adhesion strength, mechanical properties, chemical resistance, expandability when impregnated with an electrolyte solution, and the like.

In addition, both of the first and second (meth)acrylic copolymers are acid-free. If an acid is included in the adhesive layer, a complex is formed between the carboxyl group of the acid and the lithium cation ($Li^+$) of the electrolyte solution, which may adversely affect the efficiency and cycle-life of the battery.

Because both of the first and second (meth)acrylic copolymers do not contain an acid component such as (meth)acrylic acid, an acid value thereof may be less than or equal to about 1 mg KOH/g, less than or equal to about 0.5 mg KOH/g, or less than or equal to about 0.3 mg KOH/g. The lower limit is desirably closer to 0 mg KOH/g, and may be greater than or equal to about 0.05 mg KOH/g, or greater than or equal to about 0.1 mg KOH/g.

However, if acid-free, the electrode assembly may be loosened before or after being housed in the battery case due to poor adhesion to metal or the like.

In order to improve this, moieties derived from polar monomer compounds are required, and in some embodiments, moieties corresponding to the polar monomer compounds are included.

Moiety Derived from First Compound and Moiety Derived from Fourth Compound

The first (meth)acrylic copolymer includes a moiety derived from a first compound, and the second (meth)acrylic copolymer includes a moiety derived from a fourth compound.

The moiety derived from the first compound refers to a portion derived from the first compound when the first compound undergoes a chemical reaction (e.g., polymerization) to form the first (meth)acrylic copolymer. Hereinafter, the same applies to the moieties derived from the second to fourth compounds.

The first compound and the fourth compound are each independently a substituted or unsubstituted C1 to C20 alkyl (meth)acrylate-based compound.

For example, the first compound and fourth compound may each independently be 2-hydroxyethyl (meth)acrylate, 2-hydroxypropyl (meth)acrylate, 4-hydroxybutyl (meth)acrylate, 2-ethylhexyl(meth)acrylate, methyl(meth)acrylate, ethyl(meth)acrylate, propyl(meth)acrylate, butyl(meth)acrylate, pentyl(meth)acrylate, hexyl(meth)acrylate, heptyl(meth)acrylate, octyl(meth)acrylate, nonyl(meth)acrylate, decyl(meth)acrylate, dodecyl(meth)acrylate, lauryl(meth)acrylate, and the like, but is not necessarily limited thereto. These may be applied alone or in combination of two or more. Herein, (meth)acrylate means both acrylate and methacrylate.

Based on a total amount of 100 wt% of the first (meth)acrylic copolymer, the moiety derived from the first compound may be included in an amount of about 20 wt% to about 50 wt%, about 25 wt% to about 45 wt%, or about 30 wt% to about 40 wt%.

In the range, no vapor or floating occurs under heat-resistant and moisture-resistant conditions, and it has excellent durability characteristics.

For example, the fourth compound may be a combination of 2-hydroxyethyl acrylate and 4-hydroxybutyl acrylate.

In addition, based on a total amount of 100 wt% of the second (meth)acrylic copolymer, the moiety derived from the fourth compound may be included in an amount of about 100 wt%. In the range, no vapor or floating occurs under heat-resistant and moisture-resistant conditions, and it has excellent durability characteristics.

Moiety Derived from Second Compound

The first (meth)acrylic copolymer includes a moiety derived from a second compound.

The second compound may be a substituted or unsubstituted C3 to C20 cycloalkyl (meth)acrylate-based compound.

For example, the second compound may include isobornyl (meth)acrylate, bornyl (meth)acrylate, cyclohexyl (meth)acrylate, and the like, but are not necessarily limited thereto. These may be applied alone or in a mixture of two or more.

Based on a total amount of 100 wt% of the first (meth)acrylic copolymer, the moiety derived from the second compound may be included in an amount of about 30 wt% to about 70 wt%, about 35 wt% to about 65 wt%, or about 40 wt% to about 60 wt%. Durability is improved in the above range, and initial adhesion strength may be secured.

Moiety Derived from Third compound

The first (meth)acrylic copolymer includes a moiety derived from the third compound.

The third compound may be independently (meth)acrylate-based compounds having a C1 to C20 alkyl group substituted with an epoxy group.

For example, the third compound may be phenoxyethyl acrylate.

Based on a total amount of 100 wt% of the first (meth)acrylic copolymer, the moiety derived from the third compound may be included in an amount of about 0.1 wt% to about 20 wt%.

Physical Properties of First (Meth)acrylic Copolymer and Second (Meth)acrylic Copolymer

The first (meth)acrylic copolymer and the second (meth)acrylic copolymer may each independently have a weight average molecular weight of about 500,000 g/mol to about 3,000,000 g/mol. Adhesion strength and durability are excellent in the above range. The weight average molecular weight may be measured using gel permeation chromatography (GPC).

The first (meth)acrylic copolymer and the second (meth)acrylic copolymer each independently have a glass transition temperature (Tg) of - about 40 °C to about -5 °C, for example about -30 °C to about -10 °C. Workability is excellent in the above range, and durability or adhesion is excellent. The glass transition temperature may be measured using DSC (TA Instrument) equipment.

Crosslinking Agent

Regarding the crosslinking agent, as a crosslinking agent capable of being cured with active energy rays, an isocyanate-based compound that may form a polymer of a semi-interpenetrating polymer network (semi-IPN) structure by curing is the fourth compound, an isocyanurate-based compound, or combinations thereof may be used.

The isocyanate-based compound may be a trimethylolpropane (TMP) adduct type. For example, in some embodiments, as the isocyanate-based compound, trimethylolpropane-toluene diisocyanate (TMP-TDI) adduct and/or trimethylolpropane-xylylene diisocyanate (TMP-XDI) may be added.

As the isocyanurate-based compound, tris[2-(acryloyloxy)ethyl] isocyanurate may be utilized.

In one or more embodiments, in the adhesive layer, a content (e.g., amount) of the crosslinking agent may be about 0.01 to about 5 parts by weight, about 0.03 to about 4 parts by weight, or about 0.05 to about 3 parts by weight, based on 100 parts by weight of the second (meth)acrylic copolymer. Within this range, a semi-IPN structure can be stably formed.

Manufacturing Method of Base Layer

For example, the base layer including the first (meth)acrylic copolymer may be manufactured by the following method.

A first mixture including the first to third compounds is prepared, a first photoinitiator is added, and then ultraviolet (UV) light is irradiated at an intensity of 100 to 500 mJ/cm$^2$ to form a latex type first (meth)acrylic copolymer resin. A composite resin is thus prepared. A second mixture may be prepared by mixing the first (meth)acrylic copolymer resin with a second photoinitiator and a curing agent. After applying the second mixture on the first PET film, covering the second PET film, and curing the second mixture by irradiating ultraviolet (UV) with an intensity of 1000 to 5000 mJ/cm$^2$, a base layer may be obtained.

The first photoinitiator and the second photoinitiator may each independently be activated by ultraviolet light or an electron beam to activate a carbon-carbon double bond in the base layer to generate a radical reaction. As specific examples, an alpha-hydroxy ketone type compound, a benzyl ketal type compound, or a mixture thereof may be used, but embodiments of the present disclosure are not limited thereto. For example, the first and second photoinitiators may each independently be an alpha-hydroxy ketone type compound, for example, in some embodiments, 1-hydroxy-cyclohexyl-phenyl-ketone, 2-hydroxy 2-methyl-1-phenyl-1-propanone, 2-hydroxy-1-[4- (2-hydroxyethoxy)phenyl]-2-methyl-1-propanone and/or the like may be utilized. The photoinitiators may be used alone or in combination of two or more.

The first photoinitiator may be applied in an amount of 0.001 to 3 parts by weight, for example 0.003 to 1 part by weight, based on 100 parts by weight of the first mixture.

In addition, the second photoinitiator may be applied in an amount of 0.001 to 3 parts by weight, for example 0.003 to 1 part by weight, based on 100 parts by weight of the first (meth)acrylic copolymer resin.

Low light leakage and excellent durability reliability may be obtained within the above range.

Manufacturing Method of Adhesive Layer

For example, a method for preparing an adhesive layer including the second (meth)acrylic copolymer and a crosslinking agent may be as follows.

After adding a thermal initiator and a solvent to the fourth compound, partial polymerization may be performed to produce a second (meth)acrylic copolymer in the form of an oligomer. A fifth mixture may be prepared by mixing the second (meth)acrylic copolymer with a fifth isocyanate-based compound and a silane-based coupling agent as a crosslinking agent. The fifth mixture is applied to one side of a release film (for example, a PET film treated with a silicone-based release agent), dried at 100 to 150 ° C for 1 to 10 minutes, and then separated from the release film to obtain an adhesive layer.

As the thermal initiator, 2,2'-azobisisobutyronitrile may be used.

The thermal initiator may be applied in an amount of 0.001 to 3 parts by weight, for example 0.003 to 1 part by weight, based on 100 parts by weight of the second (meth)acrylic copolymer. In this range, excellent durability reliability may be obtained.

A mixture of ethyl acetate and toluene may be used as the solvent.

In one or more embodiments, a sixth mixture may be prepared by adding a sixth isocyanurate-based compound and a third photoinitiator as a crosslinking agent to the second (meth)acrylic copolymer prepared in the same manner as described above.

The sixth mixture is applied to one side of a release film (for example, a PET film treated with a silicone-based release agent), and cured by irradiating ultraviolet (UV) with an intensity of 1000 to 5000 mJ/cm$^2$. it may obtain an adhesive layer by separating from the release film.

The third photoinitiator is activated by ultraviolet rays or electron beams to activate a carbon-carbon double bond in the adhesive layer to cause a radical reaction. As specific examples, an alpha-hydroxy ketone type compound, a benzyl ketal type compound, or a mixture thereof may be used, but embodiments of the present disclosure are not limited thereto. For example, the third photoinitiator may be an alpha-hydroxy ketone type compound, for example, in some embodiments, 1-hydroxy-cyclohexyl-phenyl-ketone, 2-hydroxy 2-methyl-1-phenyl-1-propanone, 2-hydroxy-1-[4-(2-hydroxyethoxy)phenyl]-2-methyl-1-propanone and the like may be used. The photoinitiators may be used alone or in combination of two or more.

The third photoinitiator may be applied in an amount of 0.001 to 3 parts by weight, for example 0.003 to 1 part by weight, based on 100 parts by weight of the second (meth)acrylic copolymer.

Low light leakage and excellent durability reliability may be obtained within the above range.

Width of Sealing Tape

The width of the sealing tape of some embodiments may be at least about 20% of the width of the electrode assembly.

The sealing tape of some embodiments may be at least about 150 gf/cm (T-Peel peeling 300 mm/min, 10 μm negative electrode /PSA/ 10 μm negative electrode). If it is 150 gf/cm or less, the jelly roll-type electrode assembly may be loosened during a subsequent process.

**(Rechargeable Lithium Battery)**

Another embodiment provides a rechargeable lithium battery including an electrode assembly; an electrolyte solution impregnated in the electrode assembly; the sealing tape of the aforementioned embodiment attached to at least a portion of the inside of the electrode assembly; and a battery case accommodating the electrode assembly.

The electrode assembly may be a winding type electrode assembly, a so-called jelly roll.

For example, the electrode assembly may be formed by sequentially stacking a first electrode, a separator, and a second electrode and then winding them.

Herein, the sealing tape of the aforementioned embodiment may be attached to at least a portion of the inside of the electrode assembly to reduce a gap between the inner wall of the battery case and the electrode assembly and to fix the electrode assembly.

For example, a portion of the sealing tape may be exposed as an outermost layer. After the electrode assembly is placed inside the battery case, the sealing tape is attached to the inside of the outermost layer of the electrode assembly and expands when impregnated with a fluid (e.g., electrolyte solution), thereby indirectly minimizing the gap between the inner wall of the battery case and the electrode assembly, while exhibiting vibration resistance and shock resistance.

The electrolyte solution may include a carbonate-based solvent, and the carbonate-based solvent may include at least one carbonate-based solvent selected from ethylene carbonate (EC), propylene carbonate (PC), ethylmethyl carbonate (EMC), propylene carbonate (PC), dimethyl carbonate (DMC), diethyl carbonate (DEC), and dipropyl carbonate (DPC). For example, the carbonate-based solvent is ethylene carbonate (EC) or dimethyl carbonate (DMC), and propylene carbonate (PC).

In addition, the electrolyte solution may further include fluorobenzene (FB).

The electrolyte solution may include about 50 to about 99 wt%, about 60 wt% to about 95 wt%, or about 80 wt% to about 90 wt% of the carbonate-based solvent, and about 50 wt% to about 99 wt%, about 60 wt% to about 95 wt%, or about 80 wt% to about 90 wt% of the fluorobenzene (FB) based on 100 wt% of a total weight of the electrolyte solution.

When the circumferential length of the outer surface of the electrode assembly is considered to be 1, the sealing tape may have a length smaller than about 0.5.

FIG. 4 is a schematic view illustrating a rechargeable lithium battery according to some embodiments. Referring to FIG. 4, the rechargeable lithium battery 100 according to some embodiments includes a battery cell including a positive electrode 114, a negative electrode 112 facing the positive electrode 114, a separator 113 between the positive electrode 114 and the negative electrode 112, an electrolyte solution for a rechargeable lithium battery impregnating the positive electrode 114, negative electrode 112, and separator 113, a battery case 120 containing the battery cell, and a sealing member 140 sealing the battery case 120.

Hereinafter, descriptions overlapping with those described above will be omitted, and elements constituting the rechargeable lithium battery will be described in detail.

Positive Electrode

The positive electrode includes a positive electrode current collector and a positive electrode active material

layer on the positive electrode current collector, and the positive electrode active material layer includes a positive electrode active material.

The positive electrode active material may include lithiated intercalation compounds that reversibly intercalate and deintercalate lithium ions.

For example, the positive electrode active material may include one or more composite oxides of a metal selected from cobalt, manganese, nickel, and a combination thereof, and lithium. Such a positive electrode active material may be at least one of lithium composite oxides represented by Chemical Formula 5.

[Chemical Formula 5] $Li_xM^1_yM^2_zM^3_{1-y-z}O_{2\pm a}X_a$

In Chemical Formula 5,
$0.5 \leq x \leq 1.8$, $0 \leq a \leq 0.1$, $0 < y \leq 1$, $0 \leq z \leq 1$, $0 < y+z \leq 1$, $M^1$, $M^2$, and $M^3$ each independently include one or more elements selected from metals of Ni, Co, Mn, Al, B, Ba, Ca, Ce, Cr, Fe, Mo, Nb, Si, Sr, Mg, Ti, V, W, Zr or La, and a combination thereof, and X is one or more elements selected from F, S, P, or Cl.

The positive electrode active material corresponding to Chemical Formula 5 may be at least one selected from $LiCoO_2$, $LiNiO_2$, $LiMnO_2$, $LiMn_2O_4$, $LiNi_aMn_bCo_cO_2$ (a+b+c=1), $LiNi_aMn_bCo_cAl_dO_2$ (a+b+c+d=1), and $LiNi_eCo_fAl_gO_2$ (e+f+g=1).

Of course, a material in which a part of the metal of the composite oxide is substituted with a metal other than another metal may be used, and a phosphate compound of the composite oxide, for example, at least one selected from $LiFePO_4$, $LiCoPO_4$, and $LiMnPO_4$ may be used. A material having a coating layer on the surface of the oxide may be used, or a mixture of the composite oxide and the composite oxide having a coating layer may be used. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a combination thereof. The coating layer may be disposed in a method having no adverse influence on properties of a positive electrode active material by using these elements in the compound. For example, the method may include any coating method (e.g., spray coating, dipping, etc.), but is not illustrated in more detail because it is well-known to those skilled in the related field.

For example, a nickel-based positive electrode active material necessarily containing nickel may be used as the positive electrode active material. In this case, in Chemical Formula 5, $M^1$ may be Ni. For example, the cathode active material selected from $LiNi_bMn_cCo_dO_2$ (b+c+d=1), $LiNi_bMn_cCo_dAl_eO_2$ (b+c+d+e=1), and $LiNi_bCo_dAl_eO_2$ (b+d+e=1) is high nickel (high Ni)-based positive electrode active material

In the case of the $LiNi_bMn_cCo_dO_2$ (b+c+d=1) and $LiNi_bMn_cCo_dAl_eO_2$ (b+c+d+e=1), the nickel content may be greater than or equal to about 60% ($b \geq 0.6$), or greater than or equal to about 80% ($b \geq 0.8$). In the case of the $LiNi_bCo_dAl_eO_2$ (b+d+e=1), the nickel content may be greater than or equal to about 60% ($b \geq 0.6$), or greater than or equal to about 80% ($b \geq 0.8$).

Meanwhile, as the positive electrode active material, a nickel-based cobalt-free positive electrode active material that necessarily contains nickel but does not contain cobalt may be used. In this case, Chemical Formula 5 may be represented by Chemical Formula 5-1:

[Chemical Formula 5-1] $Li_xNi_yMn_{(1-y)}O_2$

$0.5 \leq x \leq 1.8$, and $0 < y < 1$.

An amount of the positive electrode active material may be about 90 wt% to about 98 wt% based on a total weight of the positive electrode composition.

In some embodiments, the positive electrode active material layer further includes a binder, and may optionally further include a conductive material. Each amount of the conductive material and binder may be about 1 wt% to about 5 wt% based on a total weight of the positive electrode composition.

The conductive material is included to impart conductivity to the positive electrode and any electrically conductive material may be used as a conductive material unless it causes a chemical change. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The binder improves binding properties of positive electrode active material particles with one another and with a current collector. Examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited

thereto.

The positive electrode current collector may include Al, but is not limited thereto.

Negative Electrode

The negative electrode includes a current collector and a negative electrode active material layer on the current collector and including a negative electrode active material. According to some embodiments, the negative electrode may have a structure in which a current collector, a negative electrode active material layer, a functional layer, and an adhesive layer are sequentially stacked.

The negative electrode active material may include a material that reversibly intercalates/deintercalates lithium ions, lithium metal, lithium metal alloy, material capable of doping and dedoping lithium, or a transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x < 2$), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, $SnO_2$, Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with $SiO_2$. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on a total weight of the silicon-carbon composite. In addition, the content of the crystalline carbon may be about 10 wt% to about 70 wt% based on a total weight of the silicon-carbon composite, and the content of the amorphous carbon may be about 20 wt% to about 40 wt% based on a total weight of the silicon-carbon composite. In addition, a thickness of the amorphous carbon coating layer may be about 5 nm to about 100 nm. An average particle diameter (D50) of the silicon particles may be about 10 nm to about 20 $\mu$m. The average particle diameter (D50) of the silicon particles may be desirably about 10 nm to about 200 nm. The silicon particles may exist in an oxidized form, and in this case, an atomic content ratio of Si:O in the silicon particles indicating a degree of oxidation may be a weight ratio of about 99:1 to about 33:66. The silicon particles may be $SiO_x$ particles, and in this case, the range of x in $SiO_x$ may be greater than about 0 and less than about 2. As used herein, when a definition is not otherwise provided, an average particle diameter (D50) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

In the negative electrode active material layer, the negative electrode active material may be included in an amount of about 95 wt% to about 99 wt% based on a total weight of the negative electrode active material layer.

In some embodiments, the negative electrode active material layer further includes a binder, and may optionally further include a conductive material. The content of the binder in the negative electrode active material layer may be about 1 wt% to about 5 wt% based on a total weight of the negative electrode active material layer. In addition, if the conductive material is further included, the negative electrode active material layer may include about 90 wt% to about 98 wt% of the negative electrode active material, about 1 wt% to about 5 wt% of the binder, and about 1 wt% to about 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

Examples of the water-insoluble binder include polyvinyl chloride, carboxylated polyvinyl chloride, polyvinyl

fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. As the alkali metal, Na, K, or Li may be used. The amount of such a thickener used may be about 0.1 parts by weight to about 3 parts by weight based on 100 parts by weight of the negative electrode active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminium, silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

Electrolyte Solution

The electrolyte solution includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. The carbonate-based solvent may be dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may be methyl acetate, ethyl acetate, n-propyl acetate, dimethyl acetate, methyl propionate, ethyl propionate, $\gamma$-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. If the organic solvent is used in a mixture, the mixture ratio may be controlled in accordance with a desirable battery performance.

In addition, in the case of the carbonate-based solvent, a mixture of a cyclic carbonate and a chain carbonate may be used. In this case, if the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

[Chemical Formula I]

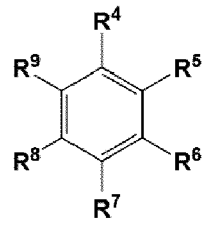

In Chemical Formula I, $R^4$ to $R^9$ are the same or different and are selected from hydrogen, a halogen, a C1 to C10 alkyl group, a haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula II in order to improve cycle-life of a battery.

[Chemical Formula II]

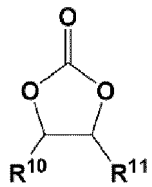

In Chemical Formula II, $R^{10}$ and $R^{11}$ are the same or different, and are selected from hydrogen, a halogen, a cyano group, a nitro group, and a fluorinated C1 to C5 alkyl group, provided that at least one of $R^{10}$ and $R^{11}$ is selected from a halogen, a cyano group, a nitro group, and a fluorinated C1 to C5 alkyl group, but both of $R^{10}$ and $R^{11}$ are not hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt may include at least one selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide; LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$ (wherein x and y are natural numbers, for example, an integer ranging from 1 to 20), lithium difluoro(bisoxolato) phosphate, LiCl, LiI, $LiB(C_2O_4)_2$ (lithium bis(oxalato) borate; LiBOB), and lithium difluoro(oxalato)borate (LiDFOB).

The lithium salt may be used in a concentration ranging from about 0.1 M to about 2.0 M. When the lithium salt is included at the above concentration range, an electrolyte solution may have excellent performance and lithium ion mobility due to optimal conductivity and viscosity of the electrolyte solution.

Separator

The separator 113 may be any generally-used separator in a rechargeable lithium battery which can separate the positive electrode 114 and the negative electrode 112 and provide a transporting passage for lithium ions

In other words, it may have low resistance to ion transport and excellent impregnation for an electrolyte solution. For example, separator may be selected from a glass fiber, polyester, Teflon, polyethylene, polypropylene, polytetrafluoroethylene, or a combination thereof. It may have a form of a nonwoven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multi-layered structure.

Rechargeable lithium batteries may be classified as lithium ion batteries, lithium ion polymer batteries, and lithium polymer batteries according to the presence of a separator and the type of electrolyte solution used therein. The rechargeable lithium batteries may have a variety of shapes and sizes, and include cylindrical, prismatic, coin, or pouch-type batteries, and may be thin film batteries or may be rather bulky in size. Because the structure and manufacturing method of these batteries are well known in the art, a detailed description thereof will be omitted.

Hereinafter, examples of the present invention and comparative examples are described. It is to be understood, however, that the examples are for the purpose of illustration and are not to be construed as limiting the present disclosure.

**(Preparation Examples)**

**Preparation Example 1: Preparation of Base Layer**

2-hydroxyethyl acrylate (2-HEA) as a first compound, isobornyl acrylate (IBOA) as a second compound, and phenoxyethyl acrylate as a third compound were utilized.

A first mixture was prepared by mixing the above compounds in a weight ratio of first compound: second compound: third compound = 35:55:10, and 0.1 part by weight of an first initiator (2,2-dimethoxy-1,2-diphenylethan-1-one) (Iracure 651) was added based on 100 parts by weight of the first mixture. Then, ultraviolet (UV) light was irradiated at an intensity of 300 mJ/$cm^2$ to prepare a latex-type of the first (meth)acrylic copolymer or kind resin having a solid content (e.g., amount) of 4 wt%.

A second mixture was prepared by mixing 0.4 parts by weight of an second initiator (Iracure 651) and 0.2 parts by weight of a curing agent (tetra(ethylene glycol) diacrylate) based on 100 parts by weight of the first (meth)acrylic copolymer prepared resin. The second mixture was coated on the first polyethylene terephthalate (PET) film to a thickness of 40 $\mu$m, the second PET film was placed thereon, and the second mixture was cured by irradiating UV with an intensity of 3000 mJ/$cm^2$ to obtain a base layer.

**Preparation Example 2: Preparation of Base Layer**

As in Preparation Example 1, 2-hydroxyethyl acrylate (2-HEA) as the first compound, isobornyl acrylate (IBOA) as the second compound, and the phenoxyethyl acrylate as the third compound were used.

A first mixture was prepared by mixing the above compounds in a weight ratio of first compound: second compound: third compound = 35:55:10, and 0.1 part by weight of an initiator (Iracure 651) was added based on 100 parts by weight of the first mixture. After adding 0.05 parts by weight of a curing agent (tetra(ethylene glycol) diacrylate), partial polymerization was performed at 65 °C for 5 minutes to prepare a resin.

A second mixture was prepared by mixing 0.4 parts by weight of an initiator (Iracure 651) and 0.2 parts by weight of a curing agent (tetra(ethylene glycol) diacrylate) based on 100 parts by weight of the prepared resin. The second mixture was coated on the first PET film to a thickness of 40 $\mu$m, the second PET film was placed thereon, and the second mixture was cured by irradiating ultraviolet (UV) light with an intensity of 3000 mJ/$cm^2$ to obtain a base layer.

**Preparation Example 3: Preparation of adhesive layer**

As the fourth compound, 2-hydroxyethyl acrylate (2-HEA) and 4-hydroxybutyl acrylate (4-HBA) were used.

A third mixture was prepared by adding the above compounds in a weight ratio of 2-hydroxyethyl acrylate: 4-hydroxybutyl acrylate = 85:15 to a four-necked flask equipped with a stirring blade, a thermometer, a nitrogen gas inlet tube, and a condenser. And, based on 100 parts by weight of the third mixture, 0.1 parts by weight of a thermal initiator (2,2'-azobisisobutyronitrile) was added with 85 parts by weight of ethyl acetate and 15 parts by weight of toluene to prepare a fourth mixture.

After introducing nitrogen gas while gently stirring the fourth mixture and substituting it with nitrogen, the liquid temperature in the flask was maintained at around 55 ° C. A solution containing a copolymer (Mw 1,300,000 g/mol, Mw/Mn = 1.7) was prepared.

A fifth mixture was prepared by adding/mixing 0.3 parts by weight of trimethylolpropane-xylylene diisocyanate (TMP-XDI, product name: Takenate D110N, manufacturer: Mitsui Chemicals) and 0.1 parts by weight of a silane-based coupling agent (KBM-403) therein. The fifth mixture was applied to one side of a PET film (separator film: SKC Haas,

manufacturer: Mitsubishi Chemical Co., Ltd., MRF38) treated with a silicone-based release agent, dried at 135 ° C for 4 minutes, separated from the PET film, and then an adhesive layer having a thickness of 10 μm was obtained.

**Preparation Example 4: Preparation of adhesive layer**

An adhesive layer was prepared in the same manner as in Preparation Example 3, except that the amount of trimethylolpropane-xylene diisocyanate used as the seventh isocyanate compound was changed to 0.5 parts by weight.

**Preparation Example 5: Preparation of adhesive layer**

A solution containing the second acrylic copolymer was prepared in the same manner as in Preparation Example 3. With respect to 100 parts by weight of the solid content of the solution containing the second acrylic copolymer, a sixth mixture was prepared by adding 2 parts by weight of tris [2- (acryloyloxy) ethyl] isocyanurate (product name: ARONIX M-315, manufacturer: Toagosei) and 0.2 parts by weight of a third photoinitiator (irgacure651) thereto. The sixth mixture was applied to one side of a PET film (separator film: SKC Haas, manufacturer: Mitsubishi Chemical Co., Ltd., MRF38) treated with a silicone-based release agent, dried at 135° C for 4 minutes, and then an adhesive layer was obtained by irradiating with ultraviolet (UV) light.

**(Examples and Comparative Examples)**

**Example 1**

**(1) Manufacture of Sealing Tapes**

On one surface of the base layer of Preparation Example 1, the adhesive layer of Preparation Example 3 was attached.

As a result, an adhesive layer having a thickness of 10 μm and a peel force of 650 gf/25 mm with respect to the glass plate was formed, and thus, the sealing tape of Example 1 was obtained. Herein, the peel force with respect to the glass plate was evaluated by Evaluation Example 2 described later.

**(2) Manufacture of Electrode Assembly and Battery Cell**

$LiNi_{0.91}Co_{0.04}Al_{0.05}O_2$ as a positive electrode active material, polyvinylidene fluoride as a binder, and ketjen black as a conductive material were mixed in a weight ratio of 98.5:0.75:0.75 and then, dispersed in N-methyl pyrrolidone, preparing positive electrode active material slurry.

The positive electrode active material slurry was coated on a 14 μm-thick Al foil, dried at 110 °C, and roll-pressed, manufacturing a positive electrode.

Negative electrode active material slurry was prepared by using a mixture of artificial graphite as a negative electrode active material and silicon particles in a weight ratio of 93.5:6.5 as a negative electrode active material, mixing the negative electrode active material, styrene-butadiene rubber as a binder, and carboxylmethyl cellulose in a weight ratio of 97:1:2, and then, dispersing the obtained mixture in distilled water.

The negative electrode active material slurry was coated on a 10 μm-thick Cu foil, dried at 100 °C, and then, roll-pressed, manufacturing a negative electrode.

After stacking the positive electrode, the separator, and the negative electrode, winding the stack into a jelly roll-type electrode assembly (cross-section diameter: 21 mm), and attaching the sealing tape of Example 1 to cover 50% of an outer circumferential surface area of the jelly roll-type electrode assembly, the jelly roll-type electrode assembly was inserted into a cylindrical can (cross-section diameter: 21mm). Subsequently, after injecting a carbonate-based electrolyte solution into the cylindrical can, the can was sealed, completing a battery cell.

As the electrolyte solution, 1.1 M $LiPF_6$ was dissolved in a mixed solvent of ethylene carbonate (EC), dimethyl carbonate (DMC), propylene carbonate (PC) and fluorobenzene (FB) were mixed in a volume ratio of EC:DMC:PC:FB=30:55:5:10.

**Example 2**

On one surface of the base layer of Preparation Example 1, the adhesive layer of Preparation Example 4 was attached.

As a result, an adhesive layer having a thickness of 10 μm and a peel force of 450 gf/25 mm with respect to the glass plate was formed. A sealing tape, an electrode assembly, and a battery cell of Example 2 were obtained in

substantially the same manner as in Example 1 except for this point (i.e., the sealing tape).

**Example 3**

On one surface of the base layer of Preparation Example 2, the adhesive layer of Preparation Example 3 was attached.

As a result, an adhesive layer having a thickness of 10 μm and a peel force of 550 gf/25 mm with respect to the glass plate was formed. A sealing tape, an electrode assembly, and a battery cell of Example 3 were obtained in substantially the same manner as in Example 1 except for this point (i.e., the sealing tape).

**Example 4**

On one surface of the base layer of Preparation Example 2, the adhesive layer of Preparation Example 5 was attached.

Accordingly, an adhesive layer having a thickness of 10 μm and a peel force of 300 gf/25 mm with respect to the glass plate was formed. A sealing tape, an electrode assembly, and a battery of Example 4 were obtained in the same manner as in Example 1 except for this point (i.e., the sealing tape).

**Comparative Example 1**

On one surface of a PET base layer, the adhesive layer of Preparation Example 4 was attached.

As a result, an adhesive layer having a peel force of 250 gf/25 mm and a thickness of 10 μm was formed. A sealing tape, an electrode assembly, and a battery cell of Comparative Example 1 were obtained in substantially the same manner as in Example 1 except for this point (i.e., the sealing tape).

**Comparative Example 2**

On one surface of a polypropylene (PP) base layer, the adhesive layer of Preparation Example 4 was attached.

As a result, an adhesive layer having a peel force of 400 gf/25 mm and a thickness of 10 μm was formed. A sealing tape, an electrode assembly, and a battery cell of Comparative Example 2 were obtained in substantially the same manner as in Example 1 except for this point (i.e., the sealing tape).

**(Evaluation Examples)**

Physical properties in Examples and Comparative Examples were evaluated in the following manner, and the evaluation results are shown in Table 1.

**Evaluation Example 1: Strain Rate of Base Layer**

In order to measure the strain rates of the base layers, specimens were prepared by cutting each base layer of Examples and Comparative Examples so that width * length = 10 mm * 10 mm.

The specimens were immersed in a carbonate-based electrolyte solution, allowed to stand for 1 day after being sealed at room temperature, and taken from the electrolyte solution and then, measured with respect to a length in a vertical direction of each specimen. Each measurement was put into Equations 1-1 and 1-2 to evaluate the strain rates.

As the electrolyte solution, 1.1 M $LiPF_6$ was dissolved in a mixed solvent of ethylene carbonate (EC), dimethyl carbonate (DMC), propylene carbonate (PC) and fluorobenzene (FB), and a volume ratio of the mixed solvent was EC:DMC:PC:FB=30:55:5:10.

[Equation 1-1]

$$\text{Strain rate in a longitudinal direction} = (L2 - L1)/L1 \times 100$$

In Equation 1-1,

L1 is a longitudinal length of the specimen measured before impregnation with the electrolyte solution, that is, 10 mm, and

L2 is a longitudinal length of the specimen measured after impregnation with the electrolyte solution.

[Equation 1-2]

$$\text{Strain rate in a width direction} = (W2 - W1)/W1 \times 100$$

In Equation 1-3,

W1 is a length in a transverse direction of the specimen measured before impregnation with an electrolyte solution, that is, 10 mm, and
W2 is a length in a transverse direction of the specimen measured after impregnation with the electrolyte solution.

**Evaluation Example 2: Peel Force of Adhesive Layer**

In order to measure the peel force of the adhesive layer, specimens were manufactured by cutting each of the sealing tapes of Examples and Comparative Examples into a size of 25 mm x 200 mm (width x length). After attaching an adhesive layer side of each of the specimens to a glass plate with a 2 kg rubber roller, the specimen was stored at room temperature for 2 hours. Subsequently, the adhesive layer was measured with respect to a peel force at a peeling speed of 5 mm/sec at a peeling angle of 180 ° by using a tensile tester.

**Evaluation Example 3: Shear strength of Adhesive Layer**

Each sealing tape specimen (width*length =10 cm * 10 cm) of the examples and the comparative examples was manufactured according to KS M3734 and then, measured with respect to shear strength of an adhesive layer of the specimen by stretching the specimen at 10 mm/min with a universal tester (TO-102, TEST ONE).

**Evaluation Example 4: Three-dimensional Shape Realization Ability of Sealing Tape**

Each sealing tape specimen was evaluated with respect to three-dimensional shape realization ability by storing each cell of the examples and the comparative examples at room temperature for one day and disassembling it to take an electrode assembly and then, examining a state of the sealing tape attached to the electrode assembly. For example, the state of the sealing tape was evaluated with respect to the three-dimensional shape realization ability according to the following criteria and three-dimensional shapes shown in FIG. 2.

O: a three-dimensional shape of a sealing tape is observed
△: no three-dimensional shape of a sealing tape is observed
X: no three-dimensional shape of a sealing tape is observed, and the sealing tape is peeled off from an electrode assembly

**Evaluation Example 5: Gap Filling Ability of Sealing Tape (Flow Prevention Ability of Electrode Assembly)**

Each sealing tape was evaluated with respect to gap filling ability in a method of evaluating anti-flow ability of an electrode assembly, and the anti-flow ability of an electrode assembly was evaluated in a residual vibration evaluation method and a residual impact evaluation method.
The residual vibration evaluation method was performed by a vibration test of UN38.3, wherein if a cell became power insensitive after the evaluation, it was judged as a disconnection of one terminal.
On the other hand, the residual impact evaluation method was performed by placing a cell in an octagonal cylinder, rotating it to check whether or not the cell became power insensitive after a predetermined period, and judging it as a disconnection of a terminal if the cell became power insensitive.
Each cell of the examples and the comparative examples were evaluated in both of the methods, from which the sealing tapes were finally evaluated with respect to gap filling ability (flow prevention ability of electrode assembly) according to the following criteria.

O: battery power was measured after the residual vibration evaluation method and the residual impact evaluation method
△: battery power was measured after the residual vibration evaluation method and the residual impact evaluation method, but resistance increased by 10% or more
X: no battery power was measured after the residual vibration evaluation method or the residual impact evaluation method

(Table 1)

| | | Examples | | | | Comparative Examples | |
|---|---|---|---|---|---|---|---|
| Evaluation factor | | 1 | 2 | 3 | 4 | 1 | 2 |
| Base layer | Type | acrylic | acrylic | acrylic | acrylic | PET | PP |
| | Strain rate (L) | 50% | 55% | 60% | 40% | 0% | 0% |
| | Strain rate (W) | 40% | 25% | 30% | 20% | 0% | 0% |
| Adhesive layer | Composition | acrylic | acrylic | acrylic | acrylic | acrylic | acrylic |
| | Peel force | 650 gf/25 mm | 450 gf/25 mm | 550 gf/25 mm | 300 gf/25 | 250 gf/25 mm | 400 gf/25 mm |
| | Shear strength | 12 kgf | 12 kgf | 12 kgf | 14 kgf | 12 kgf | 12 kgf |
| Three-dimensional shape realization ability | | ○ | ○ | ○ | ○ | X | X |
| Gap filling ability | | ○ | ○ | ○ | ○ | X | X |

**Comprehensive Evaluation Results**

Referring to Evaluation Examples 1 to 5, the sealing tapes according to some embodiments, represented by Examples 1 to 4, if in contact with a fluid such as a liquid, turned out to realize a three-dimensional shape capable of filling a gap due to mutual balance between a force generated as a base layer expands and a fixing force of an adhesive layer.

For example, the novel sealing tape according to some embodiments overcomes decrease in adhesion strength over time and an isotropic volume change of the electrode assembly due to continuous charging and discharging, and the like, and thereby, even when internal/external vibration or shock occurs, it is possible to suppress the jelly roll-type electrode assembly from flowing inside the cylindrical battery case.

Accordingly, in the rechargeable lithium battery in which the novel sealing tape according to some embodiments is applied to the gap between the cylindrical battery case and the jelly roll electrode assembly, an increase in internal resistance, damage to the electrode tab, etc. are suppressed, and excellent performance can be maintained.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of Symbols>**

1, 1': (meth)acrylic copolymer
2: crosslinking agent
100: rechargeable lithium battery
112: negative electrode
113: separator
114: positive electrode
120: battery case
140: sealing member
200: sealing tape
210: adhesive layer
220: base layer
300: semi-interpenetrating polymer network (semi-IPN) structure

**Claims**

**1.** A sealing tape for a rechargeable lithium battery, comprising

a base layer and an adhesive layer on at least one surface of the base layer;
wherein the base layer includes a first (meth)acrylic copolymer;
the first (meth)acrylic copolymer includes a moiety derived from a first (meth)acrylate-based compound having a substituted or unsubstituted C1 to C20 alkyl group; a moiety derived from a second (meth)acrylate-based compound having a substituted or unsubstituted C3 to C20 cycloalkyl group; and a moiety derived from a third (meth)acrylate-based compound having a C1 to C20 alkyl group substituted with a phenoxy group;
the adhesive layer includes a second (meth)acrylic copolymer and a crosslinking agent;
the second (meth)acrylic copolymer includes a moiety derived from a fourth (meth)acrylate-based compound having a substituted or unsubstituted C1 to C20 alkyl group.

**2.** The sealing tape of claim 1, wherein

the first compound and fourth compound are each independently
2-hydroxyethyl (meth)acrylate, 2-hydroxypropyl (meth)acrylate, 4-hydroxybutyl (meth)acrylate, 2-ethylhexyl(meth)acrylate, methyl(meth)acrylate, ethyl(meth)acrylate, propyl(meth)acrylate, butyl(meth)acrylate, pentyl(meth)acrylate, hexyl(meth)acrylate, heptyl(meth)acrylate, octyl(meth)acrylate, nonyl(meth)acrylate, decyl(meth)acrylate, dodecyl(meth)acrylate, lauryl(meth)acrylate, or a combination thereof.

**3.** The sealing tape of claim 1 or claim 2, wherein

the second compound is
isobornyl(meth)acrylate, bornyl (meth)acrylate, cyclohexyl(meth)acrylate, or a combination thereof.

**4.** The sealing tape of any one of claims 1 to 3, wherein
the third compound is phenoxyethyl acrylate.

**5.** The sealing tape of any one of claims 1 to 4, wherein
the crosslinking agent is an isocyanate-based fifth compound, an isocyanurate-based sixth compound, or a combination thereof.

**6.** The sealing tape of any one of claims 1 to 5, wherein

the first (meth)acrylic copolymer includes,
based on a total amount of 100 wt% of the first (meth)acrylic copolymer, about 20 wt% to about 50 wt% of the moiety derived from the first compound; about 30 wt% to about 70 wt% of the moiety derived from the second compound; and about 0.1 wt% to about 20 wt% of the moiety derived from the third compound.

**7.** The sealing tape of any one of claims 1 to 6, wherein

the base layer has
a strain rate according to Equation 1 is about 50% to about 150% when impregnated with an electrolyte solution at 25 °C for 120 minutes or more and 1 day or less, and
the electrolyte solution has a composition in which 1.1 M $LiPF_6$ dissolved in a solvent of ethylene carbonate (EC), dimethyl carbonate (DMC), propylene carbonate (PC), and fluorobenzene (FB) in a volume ratio of EC: DMC: PC: FB=30:55:5:10:

[Equation 1]

$$(B-A)/A$$

wherein, in Equation 1,

A is a length in a specific direction of the base layer before impregnation with an electrolyte solution; and
B is a specific direction length of the base layer after impregnation with an electrolyte solution.

**8.** The sealing tape of any one of claims 1 to 7, wherein
the base layer further includes a PET film.

**9.** The sealing tape of claim 8, wherein

the base layer includes
a first base layer including a first PET film;
a second base layer including the first (meth)acrylic copolymer; and
a third base layer including a second PET film
which are sequentially stacked, optionally wherein:

a total thickness of the base layer is about 5 μm to about 150 μm;
a thickness ratio of the first base layer : the second base layer is about 1:9 to about 9:1; and
a thickness ratio of the third base layer : second base layer is about 1:9 to about 9:1.

**11.** The sealing tape as claimed in any one of claims 1 to 10, wherein
in the adhesive layer, the second (meth)acrylic copolymer is crosslinked by the crosslinking agent to form a polymer having a semi-interpenetrating polymer network (semi-IPN) structure.

**12.** The sealing tape as claimed in claim 11, wherein
the adhesive layer comprises:

the polymer having a semi-interpenetrating polymer network (semi-IPN) structure formed by crosslinking the second (meth)acrylic copolymer with the crosslinking agent; and
a linear polymer comprising the second (meth)acrylic copolymer, independently of the polymer having a semi-interpenetrating polymer network (semi-IPN) structure.

**13.** The sealing tape of any one of claims 1 to 12, wherein
a thickness of the adhesive layer is about 5 μm to about 150 μm.

**14.** A rechargeable lithium battery, comprising

an electrode assembly;
an electrolyte solution impregnated in the electrode assembly;
a battery case accommodating the electrode assembly; and
the sealing tape for a rechargeable lithium battery of any one of claims 1 to 13 in a gap between the battery case and the electrode assembly.

FIG. 1

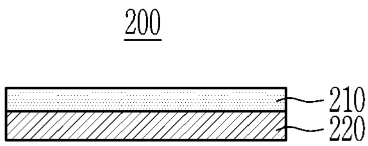

FIG. 2

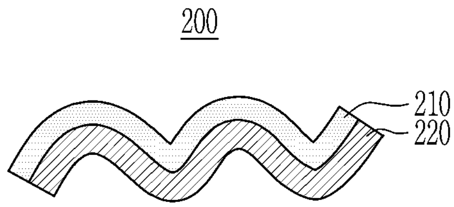

FIG. 3

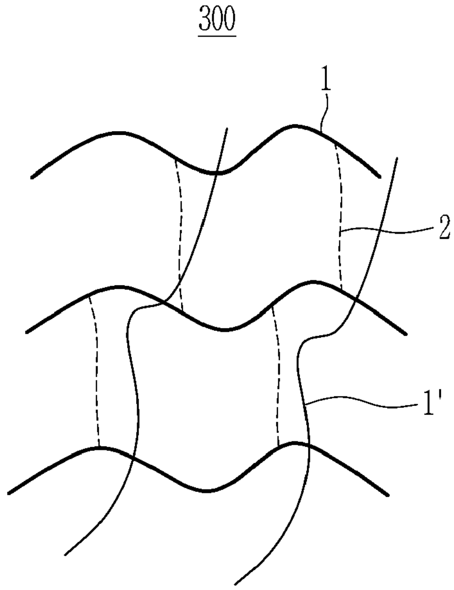

FIG. 4

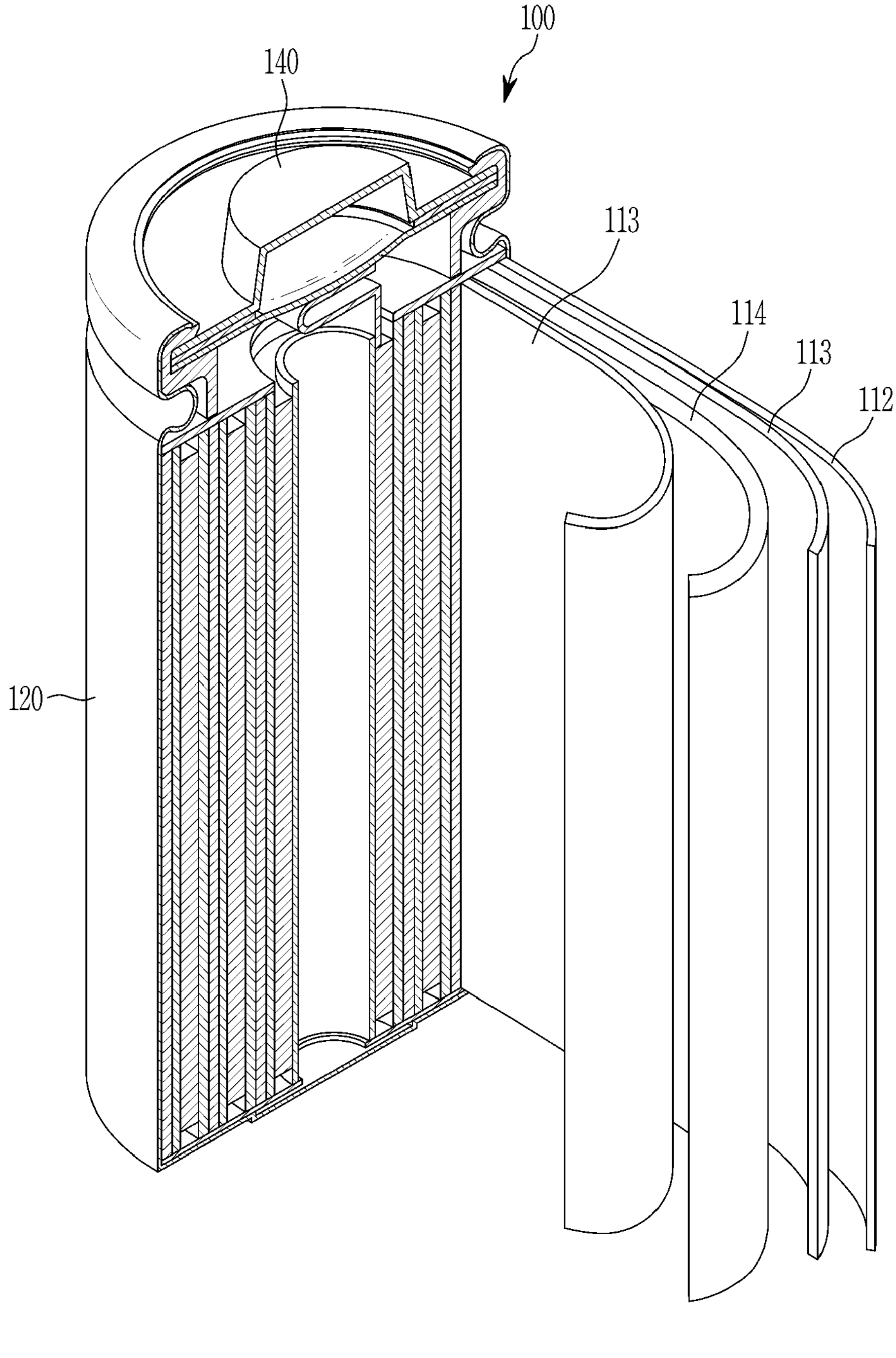

Europäisches Patentamt
European Patent Office
Office européen des brevets

# EUROPEAN SEARCH REPORT

Application Number
EP 23 19 8066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 6 210 796 B1 (LOBERT MARTIN [DE] ET AL) 3 April 2001 (2001-04-03)<br>* column 9, line 10 - column 10, line 18; claim all; example 1 *<br>----- | 1-13<br><br>14 | INV.<br>H01M50/193<br>H01M10/052<br>H01M10/0566<br>H01M10/0587<br>H01M50/186<br>H01M50/197<br>H01M50/198<br>C09J125/18<br>C09J133/08<br>C09J133/10 |
| A | EP 2 273 600 A1 (SAMSUNG SDI CO LTD [KR]) 12 January 2011 (2011-01-12)<br>* the whole document *<br>----- | 1-14 | |
| | | | TECHNICAL FIELDS SEARCHED (IPC) |
| | | | H01M<br>C08J<br>C09J<br>C08F |

The present search report has been drawn up for all claims

1

| Place of search | Date of completion of the search | Examiner |
|---|---|---|
| Munich | 11 March 2024 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 19 8066

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2024

| Patent document cited in search report | Publication date | Patent family member(s) | Publication date |
|---|---|---|---|
| US 6210796 B1 | 03-04-2001 | AT E262981 T1 | 15-04-2004 |
| | | DE 19535934 A1 | 10-04-1997 |
| | | EP 0862503 A1 | 09-09-1998 |
| | | ES 2218601 T3 | 16-11-2004 |
| | | JP 3995055 B2 | 24-10-2007 |
| | | JP H11513419 A | 16-11-1999 |
| | | US 6210796 B1 | 03-04-2001 |
| | | WO 9711787 A1 | 03-04-1997 |
| EP 2273600 A1 | 12-01-2011 | EP 2273599 A1 | 12-01-2011 |
| | | EP 2273600 A1 | 12-01-2011 |

EPO FORM P0459

For more details about this annex : see Official Journal of the European Patent Office, No. 12/82